# EUROPÄISCHE PATENTSCHRIFT

(11) **EP 1 620 484 B1**
(45) Veröffentlichungstag und Bekanntmachung des Hinweises auf die Patenterteilung: **25.04.2007**
(21) Anmeldenummer: 04739125.5
(22) Anmeldetag: 03.05.2004
(51) Int. Cl.: C08G 59/02, C08G 59/66, C08G 75/02, C08L 81/04, C08L 63/00

(54) **VERFAHREN ZUR HERSTELLUNG VON PRÄPOLYMEREN AUF DER BASIS VON POLYSULFIDEN UND POLYEPOXIDEN**
METHOD FOR PRODUCTION OF PREPOLYMERS MADE FROM POLYSULPHIDES AND POLYEPOXIDES
PROCEDE DE PRODUCTION DE PREPOLYMERES A BASE DE POLYSULFURES ET DE POLYEPOXYDES

(30) Priorität: 07.05.2003 DE 10320543
(43) Veröffentlichungstag der Anmeldung: 01.02.2006
(73) Patentinhaber: Thioplast Chemicals GmbH & Co. Kg, 07973 Greiz (DE)
(72) Erfinder: ZEITLER, Michael, 53347 Alfter (DE); KOTTNER, Nils, 07973 Greiz (DE); BERGFELD, Manfred, 63906 Erlenbach-Mechenhard (DE)
(74) Vertreter: Van Deursen, Petrus Hubertus
(86) Internationale Anmeldenummer: PCT/EP2004/004643
(87) Internationale Veröffentlichungsnummer: WO 2004/099283

(56) Entgegenhaltungen:
- DE-A- 4 141 858
- US-A- 2 789 958
- US-A- 3 663 464
- US-A- 4 689 389

## Beschreibung

Die Erfindung betrifft ein Verfahren zur Herstellung von bevorzugt flüssigen Präpolymeren ausgehend von Polysulfiden und Polyepoxiden sowie die nach diesem Verfahren hergestellten Präpolymeren. Diese Präpolymere werden hergestellt durch Umsetzung von Polysulfiden z. B. der allgemeinen Formel 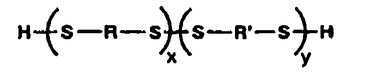 mit Polyepoxiden der allgemeinen Formel 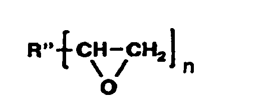 bevorzugt 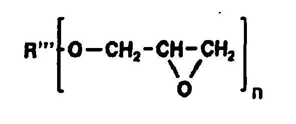 wobei n = 2 - 4.

Die Herstellung von epoxidierten Polysulfiden, zu denen die vorstehend erwähnten Präpolymere zu rechnen sind, ist an sich bereits seit langem bekannt So wird in der US 2 789 958 ein Verfahren beschrieben, bei dem Polythiopolythiole der Formel 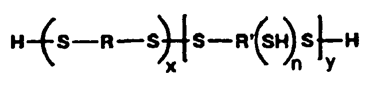 mit den verschiedensten Polyepoxiden umgesetzt werden.

Da der Index x 2 und die Indizes n und y null sein können und als Polyepoxide hauptsächlich Bisepoxide eingesetzt werden, gehören auch Polysulfide, die zwei Epoxyendgruppen aufweisen, zur Offenbarung dieser Patentschrift.
Die dort beschriebenen durch Umsetzung von Polyepoxiden mit Polysulfiden erhaltenen Produkte eignen sich jedoch nicht als flüssige, haltbare Polymere, wie nachfolgend noch näher erläutert wird.

Das Verfahren gemäß der US 2 789 958 kann zum einen ohne die Gegenwart von Katalysatoren durchgeführt werden. In diesem Fall entsteht ein uneinheitliches Gemisch.

Die Umsetzung der Epoxide mit den Polysulfiden kann aber nach Lehre dieser amerikanischen Patentschrift auch in Gegenwart von aliphatischen Aminen wie Ethylendiamin, Methyldiethanolamin usw. als Katalysator durchgeführt werden.

Wird ohne Katalysator gearbeitet, so dauert die Reaktion unverhältnismäßig lang. Bei Anwesenheit von Katalysatoren erhält man ein zähes bis hartes Produkt.

Chemisch einheitliche Produkte werden in beiden Fällen nicht erhalten.

In der EP 0 171 198 B1 wird unter Bezugnahme auf das US 2 789 958 ein Verfahren beschrieben, bei dem ein Epoxyharz mit einem Epoxygruppengehalt von 2 bis 6 Mol/kg mit einem Polymeren mit Mercaptanendgruppen mit wenigstens 2 Mercaptangruppen je Molekül und einem Molekulargewicht nicht über 2 000 umgesetzt und dabei ein härtbares flüssiges Blockcopolymer erhalten wird, das als Präpolymer bezeichnet werden kann.

Die Umsetzung muß in einem stöchiometrischen Überschuß durchgeführt werden, d. h. das Mol-Verhältnis von Epoxy-/ Mercaptangruppen soll im Bereich von 2 : 1 bis 7,5 : 1 im Falle von epoxyterminierten Präpolymeren oder im Falle von mercaptoterminierten Präpolymeren im Bereich 1 : 1,5 bis 1 : 3 liegen.

Darüber hinaus soll die Reaktion in Abwesenheit eines Katalysators oder Härtungsmittels durchgeführt werden.

Die dort beschriebenen Präpolymere, welche auch als Blockpolymere bezeichnet werden können, sind, wie in dieser Schrift nachzulesen ist, zwar nach t - 2 Wochen in etwa viskositätsstabil, und können erst dann gelagert werden, lassen jedoch, was ihre Einheitlichkeit betrifft, zu wünschen übrig. Es ist auf diese Weise in vielen Fällen nicht möglich, gezielt eine Härtung, die zu Endprodukten mit bestimmten erwünschten Eigenschaften führt, durchzuführen.

Auch dauert die Umsetzung unverhältnismäßig lange. Es hat sich nämlich gezeigt, wie den Beispielen der EP 0 171 198 B 1 zu entnehmen ist, dass eine längere Zeitspanne benötigt wird, um ein stabiles Produkt zu erhalten. So ist dort in Beispiel 2 erst nach einer Woche Lagerung bei 40° C der Mercaptangehalt auf 0 abgesunken. In Beispiel 4 ist bei einer Lagerung bei Raumtemperatur der Mercaptangehalt erst nach 16 Tagen auf 0 abgesunken.

Eine Stabilität im wahrsten Sinne des Wortes wird erst nach Wochen erreicht, wie in Beispiel 2 nachzulesen ist, wo es heißt, dass es bei einer Lagerung bei Zimmertemperatur erst nach 36 Wochen die Viskosität relativ stabil bleibt. Dies bedeutet für den Produzenten, dass er seine Produkte, bevor er sie an Kunden ausliefert, erst längere Zeit vorzugsweise bei erhöhten Temperaturen lagern muss, was produktionstechnisch und logistisch von großem Nachteil ist.

In der DE 4 141 858 A1 wird ein Verfahren beschrieben, das zweistufig arbeitet und bei dem drei verschiedene Komponenten eingesetzt werden, nämlich ein Bisphenol-A-Diglycidylether, also eine Verbindung mit Hydroxylgruppen, eine Dimercaptoverbindung oder eine Mercaptocarbonsäure sowie ein Bisphenol-A-Diglycidylether, also andere Ausgangsprodukte als es bei der Erfindung der Fall ist.

Ferner soll die Reaktion bei mindestens 100 bis 250 °C durchgeführt werden. Die erhaltenen Produkte sind über lange Zeit nicht viskositäts-stabil.

In der US PS 3 663 464 wird ein geschäumtes Mittel beschrieben, das sich schon von der Erscheinungsform beträchtlich von den Präpolymeren gemäß der Erfindung unterscheidet. Das Mittel enthält als Zusatz ein Ammoniumsalz von 4-Nitroanilin-2-Sulfonsäure, eine Verbindung, die völlig anders ist als quarternäre Ammoniumverbindungen. Außerdem hat dieses Salz nicht die Funktion eines Katalysators; als Katalysator wird ein Aminkatalysator verwendet, zusätzlich wird auch noch ein organisches Lösungsmittel wie Toluol mitverwendet.

Nach der Lehre dieser US PS sind Präpolymere, wie sie gemäß der Erfindung erhalten werden, nicht zugänglich.

Obwohl also die Herstellung von Präpolymeren mit Epoxyendgruppen bzw. Mercaptoendgruppen auf der Basis von Polysulfiden durch eine Reihe von Publikationen bereits bekannt ist, besteht noch ein Bedürfnis nach verbesserten Verfahren zur Herstellung derartiger Produkte sowie Produkten mit verbesserten Eigenschaften.

Aufgabe der Erfindung ist es deshalb, ein Verfahren zur Herstellung von Präpolymeren mit Epoxyendgruppen bzw. SH-Endgruppen durch Umsetzung von Polysulfiden und Polyepoxiden zur Verfügung zu stellen, die bezüglich ihrer Endgruppen besonders einheitlich sind und die sich vor allem zur Weiterverarbeitung mittels Härtung besonders eignen.

Aufgabe der Erfindung ist es ferner, Präpolymere mit Epoxyendgruppen bzw. SH-Endgruppen zur Verfügung zu stellen, mit denen es möglich ist, maßgeschneiderte Endprodukte mit im voraus definierten Eigenschaften herzustellen.

Aufgabe der Erfindung ist es ferner, ein Verfahren zur Verfügung zu stellen, das eine schnelle quantitative Umsetzung erlaubt, welche auch vorteilhaft stöchiometrisch entsprechend der schematischen Reaktionsgleichung I oder II ablaufen kann, d. h. zu reaktiven, rein bifunktionellen Produkten führt. 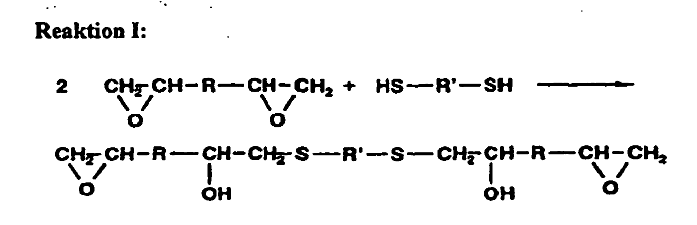 oder

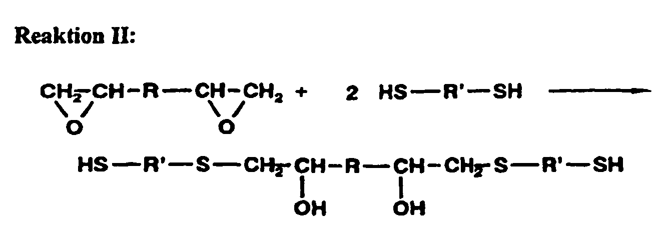

Aufgabe der Erfindung ist es ferner ein Verfahren zur Herstellung von Produktgemischen mit einheitlicher Funktionalität zur Verfügung zu stellen.

Wird nämlich bei der Reaktion gemäß dem Formelbild 1 mehr als 2 Mol Bisepoxid pro Mol Mercaptan eingesetzt, so entsteht zwar ein Gemisch, bei welchem jedoch die Funktionalität, in diesem Fall Epoxy-Funktionalität, einheitlich ist. Das gleiche gilt natürlich analog auch, wenn anstelle von Bisepoxiden Polyepoxide, beispielsweise Trisepoxide, eingesetzt werden.

Dasselbe gilt für die Reaktion gemäß Formelbild II. Wird hier pro Mol Bisepoxid mehr als 2 Mol Bis-Mercaptan eingesetzt, so entsteht ebenfalls ein Produktgemisch, das bezüglich der Endgruppen einheitlich ist, d. h. lediglich Mercaptanendgruppen aufweist. Selbstverständlich gilt das hier für die Einheitlichkeit der Endgruppen gesagte auch, wenn anstelle von Bismercaptan Trimercaptan eingesetzt wird.

Aufgabe der Erfindung ist es ferner ein Verfahren zur Verfügung zu stellen, bei dem nicht nur Produkte mit einheitlicher Bifunktionalität entstehen, sondern mit dem es auch möglich ist, gezielt einheitliche Produkte zu erhalten, die bezüglich der Mercaptogruppen bzw. der Epoxigruppen höher als bifunktionell sind oder Anteile an tri- oder höher funktionellen Präpolymeren enthalten.

Diese Aufgabe wird gelöst durch ein Verfahren zur Herstellung von Präpolymeren durch Umsetzung von Polysulfiden mit Polyepoxiden, das dadurch gekennzeichnet ist, dass man Polyepoxide mit Polysulfiden, die mindestens 2 Mercaptogruppen aufweisen, in Gegenwart von quarternären Ammoniumverbindungen als Katalysator bei einer Temperatur von 20 - 70 °C umsetzt.

Vorzugsweise werden als Polyepoxide Verbindungen der Formel 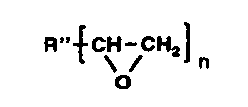 insbesondere 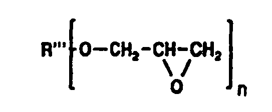 wobei n = 2 - 4 ist, und
R" oder R"' ein organischer Rest mit aliphatischer, aromatischer oder cycloaliphatischer Grundstruktur ist, verwendet.

Bevorzugt ist R"' bzw. R"

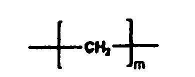

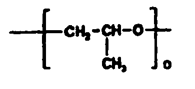

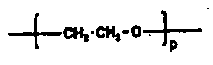

⁅CH₂-CH₂-CH₂-CH₂-0⁆

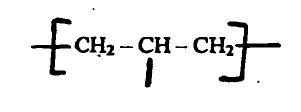

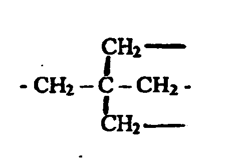

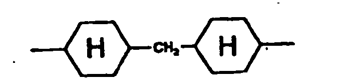

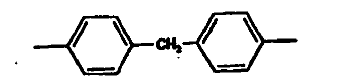

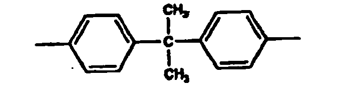

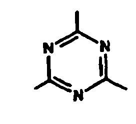

wobei m=2-10, o=1-50, p=1-50

Es können auch Gemische der vorstehend aufgeführten Epoxide oder auch unmodifizierte Epoxidharze und Novolacke wie Epilox^{®} (Leuna-Harze), Bakelite-Epoxide wie Rütapox eingesetzt werden. Auch Araldite-Harz ist geeignet.

Epilox-Harze (Leuna-Harze) werden z. B. von der Firma Leuna-Harz GmbH, D-06237 Leuna, Bakelite-Epoxide wie Rütapox^{®}-Harze von der Firma Bakelite AG, D-47125 Duisburg und Araldite-Harze von der Firma Vantico CH-4002 Basel, vertrieben.

Als Polysulfide werden vorzugsweise Polysulfide folgender Formel 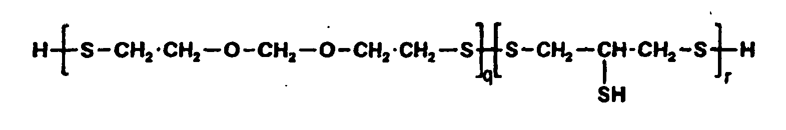
q=4-30
r =0-3
verwendet.

Vorteilhaft wird die Umsetzung in einem molaren Verhältnis von 1 Mol Polysulfid zu 2 ± 0,2 Mol Polyepoxid bzw. in einem molaren von Verhältnis 1 Mol Polyepoxid zu 2 ± 0,2 Mol Polysulfid durchgeführt, wobei ein exaktes stöchiometrisches Verhältnis 1 : 2 bzw. 2 : 1 bevorzugt ist.

In einer besonders vorteilhaften Ausführungsform des erfindungsgemäßen Verfahrens wird die die Funktionalität des Präpolymeren bestimmenden Ausgangskomponente in einem stöchiometrischen Überschuß verwendet, der z. B. bis zu 2 - bis 7-fach oder darüber sein kann.

Vorzugsweise wird als Katalysator Methyltrioctylammoniumchlorid verwendet. Dieses Produkt ist in Handel als Aliquat 336 erhältlich.

Als weitere quarternäre Ammoniumverbindungen, welche im Rahmen der Erfindung vorteilhaft eingesetzt werden können, seien beispielhaft aufgeführt:
- Diisobutylphenoxyethoxyethyl-dimethylbenzylammoniumchlorid,
- (Diisobutylphenoxyethoxyethyl)dimethylbenzylammoniumchlorid,
- (2-Hydroxyethyl)trimethylammnoniumchlorid oder -benzoat,
- Benzyldimethyl(2-hydroxyethyl)ammoniumchlorid,
- Benzyldimethyldecylammoniumchlorid.

Der Katalysator wird in katalytischen Mengen eingesetzt. Die Menge ist abhängig von der gewählten Reaktionstemperatur und der Reaktivität der eingesetzten Epoxide und kann von einem Durchschnittsfachmann durch einfache Vorversuche ermittelt werden. So reichen im allgemeinen 0,01 bis 0,5 Gew.- % bezogen auf Epoxid aus. Höhere oder niedrigere Mengen sind möglich.

Als Polyepoxid sind Bisphenol- A-diglycidylether und Bisphenol-F-diglycidylether sowie deren Gemische besonders geeignet. Außerdem sind sehr geeignet Polypropylenglycoldiglycidylether und Polyethylenglycoldiglycidytether sowie deren Gemische.

In einer vorteilhaften Ausführungsform des erfindungsgemäßen Verfahrens wird zur Herstellung von mercaptoterminierten Präpolymeren das Polysulfid vorgelegt und Polyepoxid zudosiert. Im Falle der Herstellung von epoxyterminierten Präpolymeren wird das Polyepoxid vorgelegt und Polysulfid zudosiert.

Dabei ist es vorteilhaft, in eine Vorlage zudosieren, in welcher der verwendete Katalysator bereits vorhanden ist. Es ist jedoch auch möglich, den Katalysator während des Zudosierens des Polysulfids oder des Polyepoxids mit in die Vorlage einzudosieren.

Die Umsetzung der Ausgangsprodukte entsprechend dem erfindungsgemäßen Verfahren kann bei Raumtemperatur durchgeführt werden, bevorzugt wird jedoch bei höheren Temperaturen bis 70 °C gearbeitet, vorzugsweise 50 - 70 °C.

Es ist vorteilhaft, die Umsetzung wird im Vakuum durchzuführen, vor allem, wenn die Ausgangskomponenten noch Spuren von Feuchtigkeit enthalten. Es ist ferner vorteilhaft, das Reaktionsgemisch während der Umsetzung zu rühren.

Es ist natürlich auch möglich, die Reaktionskomponenten zusammen mit dem Katalysator direkt in ein Reaktionsgefäß einzubringen und ausreagieren zu lassen.

Ein weiterer Gegenstand der Verbindung sind Präpolymere, herstellbar nach einem der vorstehend angegebenen Verfahren.

Im Gegensatz zu dem Verfahren, das in der EP 0171198 B1 offenbart wird, wo die Ausgangskomponenten lediglich gemischt und bei einer bestimmten Temperatur stehen gelassen werden, was im allgemeinen eine Zeit von mindestens zwei Tagen beansprucht, um wenigstens eine merkliche Umsetzung zu erreichen, ist es überraschenderweise gemäß der Erfindung möglich, innerhalb weniger Stunden eine quantitative Umsetzung zu erreichen und ein sehr einheitliches, stabiles Produkt mit wohl definierten Eigenschaften zu erhalten.

Die nach Abschluss der Reaktion erreichte Funktionalität und Viskosität bleiben stabil. Das Produkt kann deshalb sofort an den Endverarbeiter weitergeleitet werden und behält die zugesicherten Eigenschaften über lange Zeit unverändert bei und kann reproduzierbar zu Produkten mit definiertem Eigenschaftsprofil weiter verarbeitet werden.

Auch wenn mit einem erheblichen Überschuß an Polyepoxiden oder an Mercaptoendgruppen aufweisenden Ausgangsprodukten gearbeitet wird, bleibt das Reaktionsgemisch nach verhältnismäßig kurzer Reaktionszeit konstant und verändert seine Eigenschaften nicht mehr. Dadurch ist es möglich, gezielt ein Endprodukt mit definiertem Gehalt an Epoxid- oder Mercaptanendgruppen herzustellen. Das erhaltene Präpolymer ist somit sehr einheitlich, was die funktionellen Gruppen betrifft, außerdem ist es möglich, gezielt in weiten Bereichen auch den Anteil an funktionellen Gruppen pro Gewichtseinheit Endprodukt einzustellen; es kann sehr vorteilhaft bei der Weiterverarbeitung eingesetzt werden, z. B. auch als innerer Weichmacher für entsprechende Polymere. Darüber hinaus ist das Präpolymer mit den üblichen Härtern ausgezeichnet härtbar und führt so zu sehr einheitlichen ausgehärteten Produkten.

Es ist weiter ein exzellentes Bindemittel für Lacke, Beschichtungen und Dichtstoffe.

Als Härter können im Falle von Epoxyendgruppen aufweisenden Präpolymeren Polyamine, Polythiole oder andere übliche Verbindungen mit mindestens zwei reaktiven Wasserstoffatomen verwendet werden.

Im Falle von Mercaptoendgruppen aufweisenden Präpolymeren werden übliche Oxidationsmittel wie z. B. Mangandioxid Wasserstoffperoxid oder organische Peroxiverbindungen verwendet.

Es war ferner sehr überraschend, daß es gemäß der Erfindung möglich ist, die Reaktionen von Polyepoxiden und Mercaptoendgruppen aufweisenden Polysulfiden genau zu steuern und in kurzer Zeit ein stabiles wohl definiertes Präpolymer zu erhalten.

Die Reaktion springt im übrigen nach dem Zusammenfügen der Ausgangskomponenten und des Katalysators sofort an; die entstehende Wärme kann durch Kühlen abgeführt werden, so daß die Temperatur während der Reaktion beispielsweise zwischen 50 und 70° C genau eingehalten werden kann.

Es war besonders überraschend, daß es gemäß der Erfindung möglich ist, die Reaktion von Polyepoxiden und Mercaptoendgruppen aufweisenden Polysulfiden genau zu steuern und in kurzer Zeit ein wohl definiertes stabiles Präpolymer zu erhalten. Bei dem erfindungsgemäßen Verfahren findet nach Umsetzung gemäß der entsprechenden Reaktionsgleichung praktisch keine weitere Reaktion mehr statt, der Anfall an Nebenprodukten ist vernachlässigbar. Das erhaltene Präpolymer ist somit sehr einheitlich und kann sehr vorteilhaft bei der Weiterverarbeitung eingesetzt werden.

Die Erfindung wird durch folgende Beispiele näher erläutert.

### Beispiel 1 Epoxiterminiertes Präpolymer

In einem Reaktor werden 33,4 kg Epoxydharz (Rütapox 0166 Äquivalentgewicht 184 g/Äqu) und 70 g quarternäres Ammoniumsalz Aliquat 336 (Methyltrioctylammoniumchlorid) vorgelegt. Sodann wird ein Vakuum von 50 mbar angelegt, die Vorlage wird auf 50° C erwärmt. Nun werden im Verlauf einer Stunde 14 Kilo Polysulfid Thioplast G44 der Firma Thioplast Chemicals (Äquivalentgewicht 550 g/Äqu) zudosiert. Nach Start der exothermen Reaktion wird gekühlt.

Der Ansatz wird weitere drei Stunden bei 50 mbar und 50° C unter Rühren gehalten. Nach drei Stunden ist die Reaktion beendet. Der SH-Gehalt ist unter die Nachweisgrenze abgesunken; die Viskosität ist auch nach drei Monaten unverändert, auch der Epoxidgehalt hat sich nach den drei Monaten nicht verändert.

### Vergleichsbeispiel

Es wird analog Beispiel 1 gearbeitet, jedoch ohne den Zusatz von Aliquat 336. Nach drei Stunden bei 50° C ist der SH-Gehalt (Ausgangsgehalt 2,0%) noch bei 1,5 Gew.- %, nach 3 Tagen bei Raumtemperaturlagerung noch bei 0,9%; nach 6 Tagen ist der SH-Gehalt auf 0,12% abgefallen.

### Beispiel 2 Mercaptoterminiertes Präpolymer

In ähnlicher Weise wie in Beispiel 1 werden zunächst 2,9 kg Polypropylenglycoldiglycidylether (Epilox PL 413/42 der Firma Leuna-Harz GmbH, Leuna (Äquivalentgewicht 220 g/Äqu) und 60 g Aliquat 336 vorgelegt.

Innerhalb einer Stunde werden 36 kg Polysulfid (Thioplast G 112, Äquivalentgewicht 1200 g/Äqu) zudosiert. Der theoretische SH-Gehalt der Mischung beträgt 2,0 %. Die Reaktion springt sofort an, es wird Wärme frei, die durch Kühlung abgeführt wird, und die Temperatur wird dabei zwischen 50 und 70° C gehalten.

Nach beendeter Dosierung wird noch 3 Stunden unter Rühren bei einer Temperatur zwischen 50 und 70° C gehalten. Anschließend wird auf Raumtemperatur abkühlt. Der Epoxidgehalt des Endprodukts ist unter die Nachweisgrenze gefallen, die Viskosität ist auch noch nach drei Monaten unverändert.

### Beispiel 3 Epoxiterminiertes Prägpolymergemisch

Es wird ein Gemisch aus 765 kg Epoxydharz Epilox T 1927 (Äquivalentgewicht 180 g/Äqu) und 225 kg Epilox P 1320 (Äquivalentgewicht 150 g/Äqu) und 0,5 kg Aliquat 336 vorgelegt und auf 70° C erwärmt. Ferner wird unter intensivem Rühren ein Vakuum von 50 mbar und im Verlauf von 5 Stunden werden 510 kg Polysulfid G44 zudosiert, wobei die Temperatur bei 70° C gehalten wird. Danach wird das Reaktionsgemisch noch 4 Stunden unter weiterem Rühren auf einer Temperatur zwischen 70 und 90° C gehalten. Es entsteht ein Präpolymer, das nach Abkühlen eine Viskosität von 7 Pa.s aufweist, einen Gehalt an SH-Gruppen von 0 % und einen Epoxydgehalt von 49 Gew.- % aufweist. Die Viskosität des Produkts ist auch noch nach 6 Monaten unverändert.

## Patentansprüche

1. Verfahren zur Herstellung von Präpolymeren durch Umsetzung von Polysulfiden mit Polyepoxiden, **dadurch gekennzeichnet, dass** man Polyepoxide mit Polysulfiden, die mindestens 2 Mercaptogruppen aufweisen, in Gegenwart von quarternären Ammoniumverbindungen als Katalysator bei einer Temperatur von 20 - 70 °C umsetzt.

2. Verfahren nach Anspruch 1, **dadurch gekennzeichnet, dass** man als Polyepoxide Verbindungen der Formel 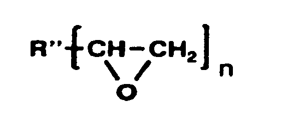 bevorzugt 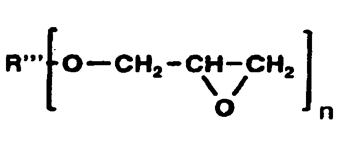 verwendet, wobei n = 2 - 4 ist und R" und R"' ein organischer Rest mit aliphatischer, aromatischer oder cycloaliphatischer Grundstruktur ist.

3. Verfahren nach Anspruch 2, **dadurch gekennzeichnet, dass** der organische Rest ausgewählt ist aus der Gruppe folgender Reste: 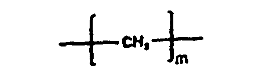 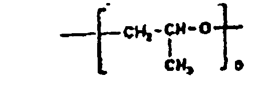 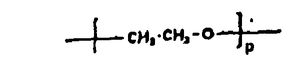
⁅CH₂-CH₂-CH₂-CH₂-0⁆ 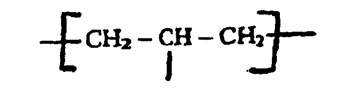 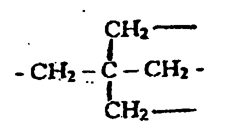 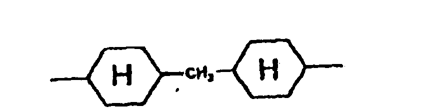 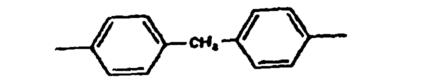 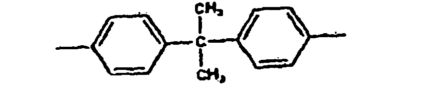 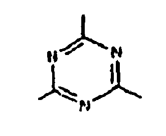
wobei m = 2 - 10, o = 1 - 50, p = 1 - 50

4. Verfahren nach Anspruch 1, **dadurch gekennzeichnet, dass** man als Epoxide unmodifizierte Epoxidharze und Novolacke verwendet.

5. Verfahren nach mindestens einem der Ansprüche 1 bis 4, **dadurch gekennzeichnet, dass** man Gemische von Epoxiden verwendet.

6. Verfahren nach mindestens einem der Ansprüche 1 bis 5, **dadurch gekennzeichnet, dass** man Polysulfide der Formel 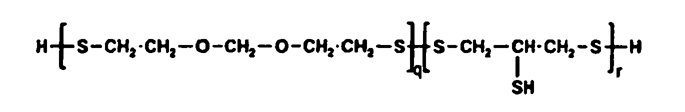 Verwendet, wobei q = 4 - 30 und r = 0 - 3.

7. Verfahren nach einem der Ansprüche 1 bis 5, **dadurch gekennzeichnet, dass** man die Umsetzung in einem molaren Verhältnis 1 Mol Polysulfid zu 2 ± 0,2 Mol Polyepoxid durchführt.

8. Verfahren nach Anspruch 7, **dadurch gekennzeichnet, dass** man die Umsetzung im stöchiometrischen Verhältnis 1 : 2 durchführt.

9. Verfahren nach einem der Ansprüche 1 bis 6, **dadurch gekennzeichnet, dass** man die Umsetzung in einem molaren Verhältnis 2 Mol Polysulfid zu 1 ± 0,1 Mol Polyepoxid durchführt.

10. Verfahren nach Anspruch 9, **dadurch gekennzeichnet, dass** man die Umsetzung in einem stöchiometrischen Verhältnis 2 : 1 durchführt.

11. Verfahren nach mindestens einem der Ansprüche 1 bis 7 und 9, **dadurch gekennzeichnet, dass** man die die Funktionalität des Präpolymeren bestimmenden Ausgangskomponente in einem stöchiometrischen Überschuss verwendet.

12. Verfahren nach Anspruch 11, **dadurch gekennzeichnet, dass** man einen 2- bis 7-fachen stöchiometrischen Überschuss verwendet.

13. Verfahren nach einem oder mehreren der Ansprüche 1 bis 12, **dadurch gekennzeichnet, dass** man Polysulfid vorlegt und Polyepoxid zudosiert.

14. Verfahren nach einem oder mehreren der Ansprüche 1 bis 12, **dadurch gekennzeichnet, dass** man Polyepoxid vorlegt und Polysulfid zudosiert.

15. Verfahren nach einem der Ansprüche 13 oder 14, **dadurch gekennzeichnet, dass** man in eine Vorlage dosiert, welche bereits den verwendeten Katalysator enthält.

16. Verfahren nach einem der Ansprüche 13 oder 14, **dadurch gekennzeichnet, dass** man den Katalysator während der Umsetzung in die Vorlage mit zudosiert.

17. Verfahren nach mindestens einem der Ansprüche 1 bis 16, **dadurch gekennzeichnet, dass** man als Katalysator Methyltrioctylammoniumchlorid verwendet.

18. Verfahren nach mindestens einem der Ansprüche 1 bis 17, **dadurch gekennzeichnet, dass** man als Polyepoxid Bisphenol A-diglycidylether oder Bisphenol-F-diglycidylether verwendet.

19. Verfahren nach Anspruch 18, **dadurch gekennzeichnet, dass** man Gemische der beiden Polyepoxide verwendet.

20. Verfahren nach mindestens einem der Ansprüche 1 bis 19, **dadurch gekennzeichnet, dass** man die Umsetzung unter Vakuum durchführt, bevorzugt bei einem Druck von 10 - 100 mbar.

21. Verfahren nach mindestens einem der Ansprüche 1 bis 20, **dadurch gekennzeichnet, dass** man die Umsetzung unter Rühren durchführt.

22. Verfahren nach mindestens einem der Ansprüche 1 - 21, **dadurch gekennzeichnet, dass** man die Umsetzung bei Temperaturen von 50 bis 70° C durchführt.

23. Lagerstabile Präpolymere, hergestellt nach einem Verfahren gemäß einem oder mehreren der Ansprüche 1 - 22.

## Claims

1. Process for the preparation of prepolymers through the reaction of polysulfides with polyepoxides, **characterised in that** polyepoxides are reacted with polysulfides having at least 2 mercapto groups, in the presence of quarternary ammonium compounds as catalyst at a temperature of 20 -70°C.

2. A process according to claim 1, **characterised in that** as polyepoxides compounds of the formula 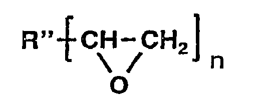 preferably 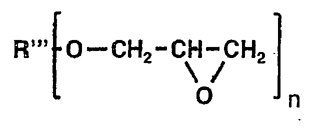 are used, wherein n = 2 - 4 and R" and R"' are an organic group with an aliphatic, aromatic or cycloaliphatic skeletal structure.

3. A process according to claim 2, **characterised in that** the organic group is selected from the group of the following groups: 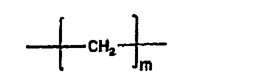 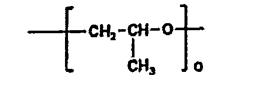 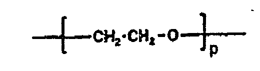
⁅CH₂-CH₂-CH₂-CH₂-0⁆ 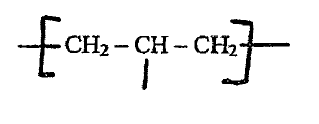 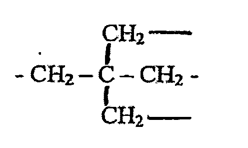 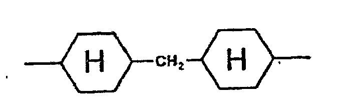 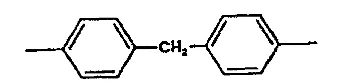 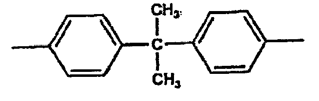 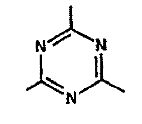
wherein m = 2 - 10, o = 1 - 50, p = 1 - 50.

4. A process according to claim 1, **characterised in that** as epoxides unmodified epoxy resins and novolacks are used.

5. A process according to at least one of claims 1 - 4, **characterised in that** mixtures of epoxides are used.

6. A process according to at least one of claims 1 - 5, **characterised in that** polysulfides of the formula 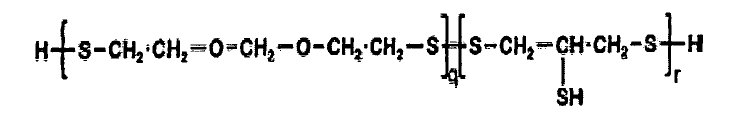 wherein q = 4 - 30 and r = 0 - 3, are used.

7. A process according to any one of claims 1 - 5, **characterised in that** the reaction is carried out in a molar ratio of 1 mol polysulfide to 2 ± 0.2 mol polyepoxide.

8. A process according to claim 7, **characterised in that** the reaction is carried out in a stoichiometric ratio of 1 : 2.

9. A process according to any one of claims 1 - 6, **characterised in that** the reaction is carried out in a molar ratio of 2 mol polysulfide to 1 ± 0.1 mol polyepoxide.

10. A process according to claim 9, **characterised in that** the reaction is carried out in a stoichiometric ratio of 2 : 1.

11. A process according to at least one of claims 1 - 7 and 9, **characterised in that** the starting components determining the functionality of the prepolymer are used in a stoichiometric excess.

12. A process according to claim 11, **characterised in that** a 2- to 7-fold stoichiometric excess is used.

13. A process according to one or more of claims 1 - 12, **characterised in that** polysulfide is present and polyepoxide is dosed thereto.

14. A process according to one or more of claims 1 - 12, **characterised in that** polyepoxide is present and polysulfide is dosed thereto.

15. A process according to either of claims 13 and 14, **characterised in that** dosing takes place in a receiver which already contains the used catalyst.

16. A process according to either of claims 13 and 14, **characterised in that** the catalyst is co-dosed to the receiver during the reaction.

17. A process according to at least one of claims 1 - 16, **characterised in that** as catalyst methyltrioctyl ammonium chloride is used.

18. A process according to at least one of claims 1 - 17, **characterised in that** as polyepoxide bisphenol-A diglycidyl ether or bisphenol-F diglycidyl ether is used.

19. A process according to claim 18, **characterised in that** mixtures of both polyepoxides are used.

20. A process according to at least one of claims 1 - 19, **characterised in that** the reaction is carried out under vacuum, preferably at a pressure of 10 - 100 mbar.

21. A process according to at least one of claims 1 - 20, **characterised in that** the reaction is carried out with stirring.

22. A process according to at least one of claims 1 - 21, **characterised in that** the reaction is carried out at a temperature of 50 - 70°C.

23. Storage-stable prepolymers, prepared according to a process according to one or more of claims 1 - 22.

## Revendications

1. Procédé de production de prépolymères par la réaction de polysulfures avec des polyépoxydes, **caractérisé en ce que** l'on fait réagir des polyépoxydes avec des polysulfures qui présentent au moins deux groupes mercapto en présence de composés d'ammonium quaternaire servant de catalyseur à une température allant de 20 à 70°C.

2. Procédé selon la revendication 1, **caractérisé en ce que** l'on utilise comme polyépoxydes des composés de la formule 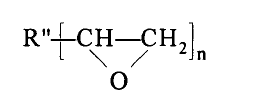 de préférence 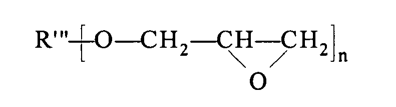 dans laquelle n vaut de 2 à 4 et R" et R"' représentent un résidu organique ayant une structure de base aliphatique, aromatique ou cycloaliphatique.

3. Procédé selon la revendication 2, **caractérisé en ce que** le résidu organique est choisi dans le groupe comprenant les résidus suivants : 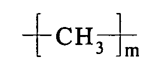 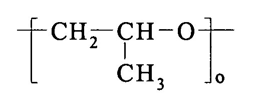 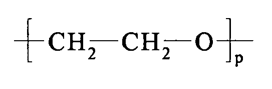
⁅CH₂-CH₂-CH₂-CH₂-O⁆ 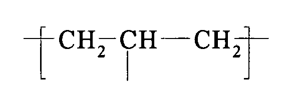 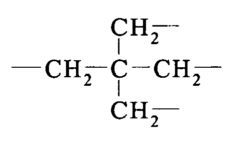 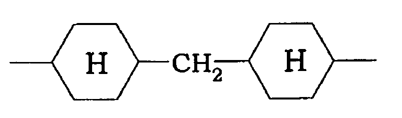 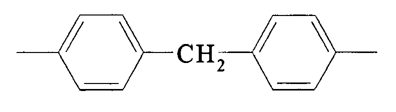 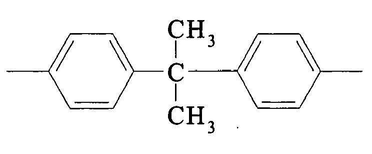 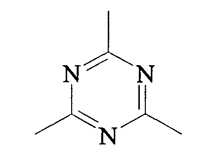
dans lesquels m vaut de 2 à 10, o vaut de 1 à 50, p vaut de 1 à 50.

4. Procédé selon la revendication 1, **caractérisé en ce que** l'on utilise comme époxydes des résines époxydiques non modifiées et des novolaques.

5. Procédé selon l'une au moins des revendications 1 à 4, **caractérisé en ce que** l'on utilise des mélanges d'époxydes.

6. Procédé selon l'une au moins des revendications 1 à 5, **caractérisé en ce que** l'on utilise des polysulfures de la formule 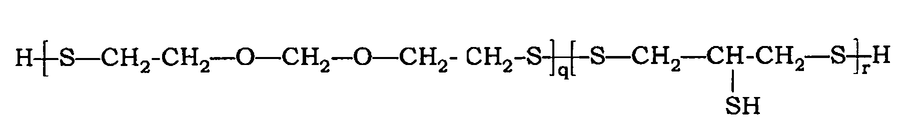 dans laquelle q vaut de 4 à 30 et r vaut de 0 à 3.

7. Procédé selon l'une des revendications 1 à 5, **caractérisé en ce que** l'on effectue la réaction selon un ratio molaire de 1 mole de polysulfure pour 2 ± 0,2 moles de polyépoxyde.

8. Procédé selon la revendication 7, **caractérisé en ce que** l'on effectue la réaction selon un ratio stoechiométrique de 1 : 2.

9. Procédé selon l'une des revendications 1 à 6, **caractérisé en ce que** l'on effectue la réaction selon un ratio molaire de 2 moles de polysulfure pour 1 ± 0,1 mole de polyépoxyde.

10. Procédé selon la revendication 9, **caractérisé en ce que** l'on effectue la réaction selon un ratio stoechiométrique de 2 : 1.

11. Procédé selon l'une au moins des revendications 1 à 7 et 9, **caractérisé en ce que** l'on utilise le composant de départ déterminant la fonctionnalité du prépolymère en un excès stoechiométrique.

12. Procédé selon la revendication 11, **caractérisé en ce que** l'on utilise un excès stoechiométrique de 2 à 7 fois.

13. Procédé selon l'une ou plusieurs des revendications 1 à 12, **caractérisé en ce que** l'on introduit d'abord le polysulfure puis on y ajoute le polyépoxyde.

14. Procédé selon l'une ou plusieurs des revendications 1 à 12, **caractérisé en ce que** l'on introduit d'abord le polyépoxyde puis on y ajoute le polysulfure.

15. Procédé selon l'une des revendications 13 ou 14, **caractérisé en ce que** l'ajout se fait dans une charge de départ qui contient déjà le catalyseur utilisé.

16. Procédé selon l'une des revendications 13 ou 14, **caractérisé en ce que** l'on ajoute conjointement le catalyseur dans la charge de départ pendant la réaction.

17. Procédé selon l'une au moins des revendications 1 à 16, **caractérisé en ce que** l'on utilise comme catalyseur du chlorure de méthyltrioctylammonium.

18. Procédé selon l'une au moins des revendications 1 à 17, **caractérisé en ce que** l'on utilise comme polyépoxyde de l'éther diglycidylique de bisphénol A ou de l'éther diglycidylique de bisphénol F.

19. Procédé selon la revendication 18, **caractérisé en ce que** l'on utilise des mélanges des deux polyépoxydes.

20. Procédé selon l'une au moins des revendications 1 à 19, **caractérisé en ce que** l'on effectue la réaction sous vide, de préférence sous une pression allant de 10 à 100 mbar.

21. Procédé selon l'une au moins des revendications 1 à 20, **caractérisé en ce que** l'on effectue la réaction sous agitation.

22. Procédé selon l'une au moins des revendications 1 à 21, **caractérisé en ce que** l'on effectue la réaction à des températures allant de 50 à 70°C.

23. Prépolymères stables au stockage, produits par un procédé selon l'une ou plusieurs des revendications 1 à 22.
